## Europäisches Patentamt
## European Patent Office
## Office européen des brevets

(11) Publication number: **0 012 118**
**A1**

# (12) EUROPEAN PATENT APPLICATION

(21) Application number: **79830038.0**

(22) Date of filing: **18.10.79**

(51) Int. Cl.³: **F 16 K 7/17**
**A 47 L 15/42, D 06 F 39/08**

(30) Priority: **30.11.78 IT 3036278**

(43) Date of publication of application:
**11.06.80 Bulletin 80/12**

(84) Designated Contracting States:
**BE CH DE FR GB LU NL SE**

(71) Applicant: **SETI S.p.A.**
**Località S. Maria La Bruna**
**I-80040 Torre del Greco (Napoli)(IT)**

(72) Inventor: **Ranzanigo, Pierluigi**
**Via Cave 68**
**Brescia(IT)**

(74) Representative: **D'Orio, Aldo**
**Via Francesco Sforza 5**
**I-20122 Milan(IT)**

(54) Improvements in diaphragm valves of water valves, particularly for washing machines.

(57) The invention is related to an improved diaphragm valve of water valves of the kind wherein a yieldable resilient diaphragm (15), centrally reinforced by a plate (25) of stiff material, forms, from part to part, the valve closing the water passage and, from opposite part, forms a pressure chamber, so that the valve opening and closing take place with the establishment respectively of a pressure and a pressure drop being determined by a closing member operated by the movable core of a solenoid, said plate in stiff material is provided with a peripheral undercutting (32) which in the coupling with the central zone of the diaphragm (15) forms an annular channel, spacing takes being provided to maintain open said peripheral channel, the latter communicating in turn with an annular channel praticated on the face of the diaphragm portion contacting said plate (25).

Fig. 2

- 1 -

Improvements in diaphragm valves of water valves,
particularly for washing machines

This invention is related to improvements in diaphragm
valves of the water valves emploied particularly in
washing machines, such as dish-washing machines or linen-
washing machines for home use.

Water valves of said kind are known in the prior art,
wherein the water way is controlled by a diaphragm valve
operating in such a way that its closing and its opening
is caused by the pressure of the supply line feeding the
washing machine in cooperation with a movable member
moved by the movable core of a solenoid valve.

Such a diaphragm valve includes a resilient diaphragm
being peripherally flexible and centrally stiffened by a
plate.

The diaphragm is fixed in a way that, from a part, it acts
with the rigid portion on a valve seat opened towards the
outlet, while, from the other part, defines a pressure
chamber communicating through a first hole with the water
inlet under pressure and through a second hole with the outlet.

The operation of the valve takes place by actuating the movable member moved by the solenoid valve core, that is when the solenoid is de-energized, the closing member with the movable core is pushed by a light spring to close the communication duct between the pressure chamber and the valve outlet, so that inside said pressure chamber, water enters increasing the pressure on the diaphragm and holding the latter in a closing position against the valve seat.

On the contrary, when the solenoid is energized, the core is attracted together with the closing member, enabling the duct communicating with the outlet to pass water from the pressure chamber to the outlet, causing a pressure drop in said chamber, so as the diaphragm will be raised from the same pressure of the coming water.

The valves of said kind are generally operable for pressures above a certain value, but they are particularly defective for light pressures, as they are unable to guarantee a stable closing and opening.

Said disadvantages are caused above all by the limited peripheral flexibility of the diaphragm, which offers in this way a certain resistance to the light pressure of the water and to adherence phenomena between the same diaphragm and the plate preventing the diaphragm zone facing the plate from participating to flexion movements of the same diaphragm.

Another disadvantage is that such is the diaphragm flexion during the opening phase tah said diaphragm can adhere to the upper wall of the pressure chamber showing a certain inertia during the closing phase, said inertia increasing, of course, in case of water supplied by light pressure.

This invention eliminates said disadvantages and allows the diaphragm to safely operate also in case of light pressure of the supply water.

To this end the improved diaphragm valve of the present invention is characterised in that the plate coupled with the central zone of the diaphragm is provided with a peripheral undercutting which, in the coupling with said diaphragm central zone, forms an annular channel communicating with the pressure chamber through the gaps formed with the movement of the flexible peripheral wall of the diaphragm; spacing takes being provided to maintain open said peripheral channel, said peripheral channel communicating in turn with an annular channel praticated on the face of the diaphragm portion contacting said plate.

In addition, on the plate face facing the pressure chamber are provided raised walls, preferably disposed along a circumference and designed to maintain said plate spaced from the upper wall of the pressure chamber.

The foregoing and other additional features will become apparent from the the following specification of the not

limitative example of embodiment as shown in the accom-
panying drawing, wherein:

figure 1 is a middle cross-section of a water valve
including the improved diaphragm according to the
present invention;
figure 2 is an enlarged view of said diaphragm.

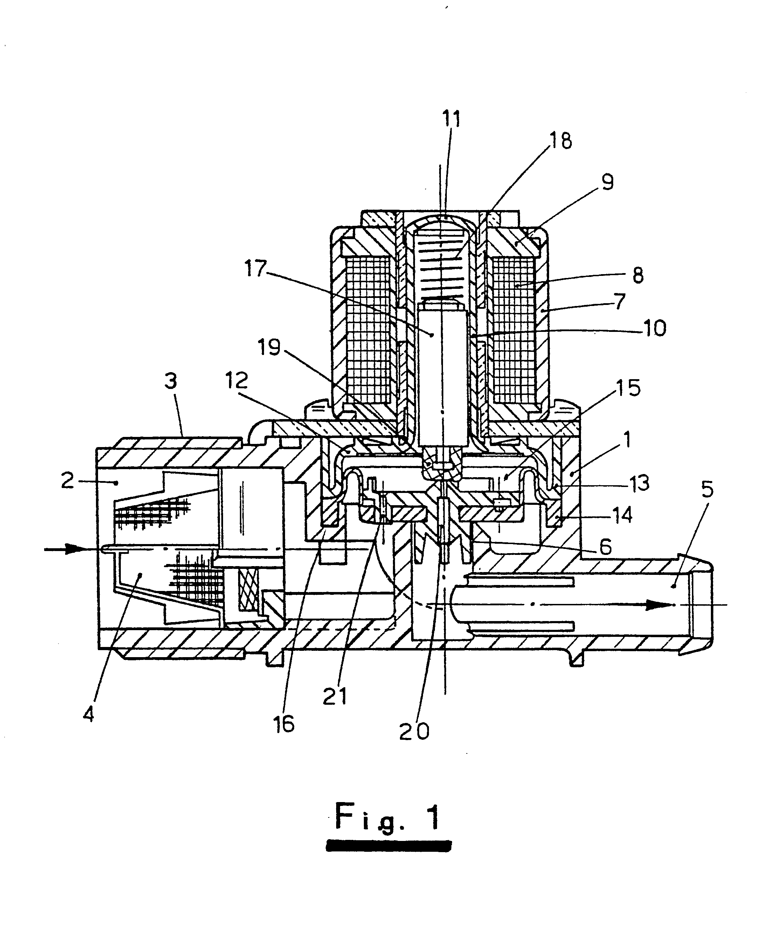

As shown in figure 1, a water valve for the control of
the water passage  in a washing machine includes a body
1 that, according to the recentest art, is a plastic
material, but it could also be metallic, such as brass.

The body 1 has an inlet 2 provided with a connection
thread 3, said inlet being directed toward the supply
line feeding the water.

Said inlet 2 is preferably intercepted by a wire gauze
filter 4 being able to hold even the smallest solid impurities dragged by the water.

From the opposite part, the valve has an outlet 5, while
inside the valve is provided an annular valve seat 6 that,
in closing position, prevents the water from passing from
the inlet 2 toward the outlet 5.

Above the body 1 is provided a casing 7 enclosing a
solenoid including a coil 8 wound on an inner spool 9
provided with an axial hole filled with a cylindrical
housing 10, preferably in plastic material, closed, on
the upper part, by an integral cap 11 and enlarging

inside the body 1 to form an upper wall 12 of a pressure
chamber, said wall 12 being bent in 13 so as to constitute
a resting edge for a peripheral ring 14 of a diaphragm 15,
anchoring the peripheral ring of the diaphragm in a seat
16 and sealing it, so that between the diaphragm 15 and
the upper wall 12 is formed said pressure chamber, the
latter being explained later.

Said chamber communicates with the interior of the cylin-
drical housing 10, into which slides the movable core 17
of the solenoid.

Said movable core is pushed toward the bottom by a recall
spring 18, interposed between the core and the integral
cap 11 of the housing 10, said movable core being provided toward the pressure chamber with a closing member 19.

The whole is conceived in a way that, when the solenoid
is de-energized, the core 17 is subject to the thrust of
the spring 18 and therefore the closing member 19 is
rested on the mouthpiece of a conduit 20 traversing the
diaphragm, occluding said mouthpiece and enabling the
water coming from the inlet 2 to fill the pressure chamber toward a conduit 21, the latter traversing the
diaphragm and being disposed toward the pressure water
arrival.

In this way, in the pressure chamber is established the
pressure of the supply line pushing the diaphragm to
close against the seat 6, interrupting the water passage.

When, on the contrary, thé solenoid is energized, the core 17 is attracted toward the interior against the thrust of the spring 11.

Consequently the conduit 20 is opened, communicating in this way the pressure chamber with the outlet.

Consequently the pressure in the pressure chamber drops and the pressure of the entering water raises the diaphragm, opening therefore the valve and enabling the water passage toward the outlet 5.

All the foregoing referred to figure 1 have to be considered as a known art.

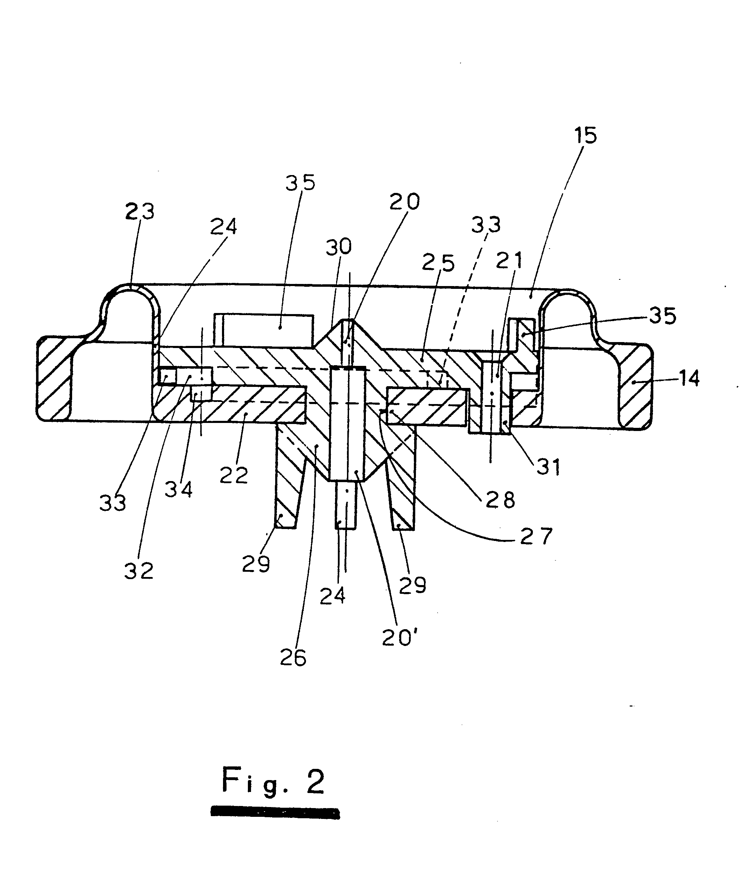

Still according to the known art, as shown by figures 1 and 2, the diaphragm 15 is in a resilient yieldable material, such as rubber or another suitable material, and is shaped so as to present, besides the peripheral ring 14, a circular middle zone 22; between the ring 14 and the zone 22 being interposed a thin wall 23 forming an annular wave being the proper diaphragm flexible element.

The wall 23 extends internally with a right section 24 connecting about perpendicularly with the central zone 22.

Always according to the known art, the diaphragm 15, in the central position 22, is coupled with a plate 25 of

stiff material, for example stiff plastic material, the diameter of which is substantially equal than the diameter of the central portion 22 of the diaphragm.

Said plate has centrally a projection 26, downwardly directed, shaped in a way to form with the plate lower face an annular groove 27 into which is fitted the edge 28 of a hole obtained in the portion 22 to allow the passage and the fixing of the projection 26.

Said projection 26 is extended by guide legs 29 which are disposed inside the seat 6 of the valve.

From a small counteropposed projection 30 is provided the hole 20 which communicates the pressure chamber with the outlet and which traverses axially the projection 26, said hole being able to increase in diameter, as at 20, inside said projection.

Sideways the plate 25 is extended downwardly with a cylindrical spout 31, the latter being provided with the through hole 21, which communicates the water inlet with the valve pressure chamber.

According to this invention, the plate 25 has on its lower face a peripheral undercutting 32 which, by coupling with the central zone 22 of the diaphragm, forms an annular channel which can communicate with the exterior through gaps generating because of the flexibility of the right section 24 of the wall 23.

The channel is maintained in constant cross-section by means of stakes 33, distributed along the peripheral portion of the same plate 25, said stakes constituting spacers preventing the resilient portion 22 from closing the channel.

Correspondingly, on the face of the portion 22 facing the plate, is obtained an annular channel 34, which is kept in continuous communication with the channel 32, so that the channels 32 and 34 constutute elements enabling the infiltration of water film between the facing surfaces of the plate and the diaphragm portion 22, thereby eliminating adherence phenomena and rendering more flexible the diaphragm, as said channels allow the same portion 22 to participate to the resilient deformation of the diaphragm, notwithstanding the greater thickness of the latter.

Always in accordance with this invention, on the upper face of the plate 25, walls 35 are raised, preferably distributed along a circumference and suitably spaced therebetween, which walls have to end to keep the diaphragm spaced from the upper wall 12 of the pressure chamber, in order to avoid adherence phenomena to this wall, still permitting the water passage.

This arrangement allows a quick correspondance of the valve to closing, because eliminates any resistance to the flooding of the pressure chamber by pressure water.

It can be noted from the foregoing that the diaphragm flexibility is higly increased and adherence phenomena are eliminated which could oppose to the movement of the same diaphragm.

This allows the diaphragm to be controlled even by water flowing with a very low pressure, and to be firmly arranged in the opening and closing position, which positions are not critical even with light pressures of the supply water.

Of course this invention is not limited to the above illustrated embodiment and various modifications and rearrangements as will occur to those skilled in the art upon full comprehension of this invention may be resorted to without departing from the scope of this invention.

Claims

1. Improvements in diaphragm valves of water valves particularly for washing machines, of the kind wherein a yieldable resilient diaphragm (15) centrally reinforced by a plate (25) of stiff material, from a part, the valve closing the water passage and, from the opposite part, forms a pressure chamber, so that the valve opening and closing take place with the establishment respectively of a pressure and a pressure drop inside said pressure chamber, the establishment of the pressure or the pressure drop being determined by a closing member (19) operated by the movable core (17) of the solenoid (18) which closes or opens a through hole (20) communicating said pressure chamber with the valve outlet (5), characterized in that the plate (25) coupled with the central zone (22) of the diaphragm is provided with a peripheral undercutting (32), which, in the coupling with said diaphragm central zone (22), forms an annular channel communicating with the pressure chamber through the gaps formed with the movement of the flexible peripheral wall of the diaphragm; spacing stakes (33) being provided to maintain open said peripheral channel, said peripheral channel communicating in turn with an annular channel (34) praticated on the face of the diaphragm portion contacting said plate.

2. Improvements in diaphragm valves according to claim 1, characterized in that on the plate face facing the pressure chamber are provided raised walls (35), preferably disposed along a circumference and designed to maintain said plate spaced from the upper wall of the pressure
chamber.

Fig. 1

Fig. 2

| Category | Citation of document with indication, where appropriate, of relevant passages | Relevant to claim |
|---|---|---|
| | GB - A - 1 324 039 (FATON YALE) <br> + Page 3, lines 105 to 129; fig. 4 + <br> -- | 1 |
| | GB - A - 1 275 221 (FATON YALE) <br> + Page 3, lines 37 to 52 + <br> -- | 1 |
| | DF - B - 1 284 232 (DANFOSS) <br> + Column 3, lines 24 to 46 + <br> -- | 1 |
| | DE - A - 2 245 296 (FUROPF) <br> + Fig. 7 + <br> -- | 1 |
| | US - A - 3 195 561 (GENERAL ELFCTRIC) <br> + Fig. 2 + <br> -- | 2 |
| | US - A - 3 788 347 (GENERAL ELECTRIC) <br> + Fig. 2 + <br> -- | 2 |
| | GB - A - 1 127 081 (THE DOLF) <br> + Fig. 2 + <br> -- | 2 |
| A | DF - B2 - 2 428 650 (FLGF) <br> + Totality + <br> -- | |
| A | DE - A1 - 2 710 052 (JAKSA) <br> + Totality + <br> -- | |

**DOCUMENTS CONSIDERED TO BE RELEVANT**

**CLASSIFICATION OF THE APPLICATION (Int. Cl.)** 3

F 16 K 7/17
A 47 L 15/42
D 06 F 39/08

**TECHNICAL FIELDS SEARCHED (Int.Cl.)** 3

F 16 K 7/00
F 16 K 31/00
A 47 L 15/00
D 06 F 39/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 30-01-1980 | KRFHAN |

EPO Form 1503.1  06.78

| Category | Citation of document with indication, where appropriate, of relevant passages | Relevant to claim |
|---|---|---|
| | **DOCUMENTS CONSIDERED TO BE RELEVANT** | |
| A | <u>DE - A - 2 420 175</u> (MAROCCO) <br><br> + Totality + <br><br> -- | |
| A | <u>DE - A - 1 550 193</u> (THE DOLF) <br><br> + Totality + <br><br> ---- | |

**CLASSIFICATION OF THE APPLICATION (Int. Cl³)**

**TECHNICAL FIELDS SEARCHED (Int. Cl³)**